# EUROPEAN PATENT SPECIFICATION

(11) **EP 1 145 627 B1**
(45) Date of publication and mention of the grant of the patent: **02.06.2004**
(21) Application number: 01201046.8
(22) Date of filing: 21.03.2001
(51) Int. Cl.: A01K 5/02, A01K 15/02, G01G 21/23, G01G 13/22, G01G 19/14

(54) **A feed metering device**
Dosiervorrichtung für Futter
Dispositif de dosage d'alimentation

(30) Priority: 10.04.2000 NL 1014895
(43) Date of publication of application: 17.10.2001
(60) Divisional application: 03077507.6
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- EP-A- 0 610 171
- EP-A- 0 636 312
- WO-A-95/23503
- WO-A-96/05723
- NL-A- 9 201 487
- NL-C- 1 002 399
- US-A- 5 570 655

## Description

The present invention relates to a feed metering device for distributing fodder and/or drink in metered portions to an animal according to the preamble of claim 1.

Such a feed metering device is known, for example from the International patent application WO 96/05723. In this document a construction is described with a box for both milking and feeding an animal. Near the leading side of the box, a feeding trough is attached to an upright by means of a parallelogram construction. At its bottom side, the trough is supported by a supporting beam. Between this beam and the bottom side there is provided a measuring device with the aid of which the weight of the trough and its contents can be determined. A computer-controlled spraying device with the aid of which fodder present in the trough can be moistened. A metering device for dispensing fodder into the trough is attached above the trough. This metering device includes a hopper for the fodder. By means of the measuring device there can be determined how much fodder a relevant animal has consumed during the feeding period.

A disadvantage of the known feed metering devices is that an animal has quickly found out where the fodder and/or drink can be obtained, and regularly goes to the feed metering device and puts its head into the feed unit, even when it has already received its portion of fodder and/or drink. This results in a disturbance of the feeding of other animals. Animals that are not eligible for visiting the feed unit are usually chased away manually, which is time-consuming and labour-intensive. Alternatively, the use of entrance gates that regulate the flow of animals towards the feed metering device is known. However, these entrance gates are expensive and do not tend to promote the animals moving around; moreover, the entrance gates are regularly damaged because the animals lean against them with their full weight. Sometimes the entrance gates are even the cause of wounds with the animals.

It is the object of the invention to offer an accurate solution to these problems.

This can be done by means of a feed metering device of the above-mentioned art, characterized in that deterring means are provided for deterring an animal that visits the feed unit from taking fodder and/or drink, said deterring means include a closing means that is movable across the entrance opening and constituted by the feed unit which feed unit is designed as a movable one. In this manner the contents of the feed unit can be made inaccessible to a particular animal. By constituting the closing means by the feed unit itself, which is designed as a movable one, the number of components is limited and the feed metering device can be manufactured cheaply.

In order to prevent fodder and/or drink from falling from the feed unit in certain positions of the feed unit, the latter comprises a wall portion for catching remaining feed. Said wall portion can also act as a feed guide means for fodder and/or drink that is supplied by the feed supplying device to the feed unit.

Preferably the feed metering device according to the invention is further provided with an animal identification device for recognizing a particular animal that visits the feed unit. In this situation by an animal that visits the feed unit is meant an animal that is in a position in which it is actually able to take fodder and/or drink. Thus it is possible for the feed supplying device to supply an amount of feed to the feed unit with the aid of data from the animal identification device.

Preferably the deterring means deter an animal with the aid of data from the animal identification device. Just because the animal identification device is able to recognize a particular animal, said device is particularly appropriate for deterring an animal that wishes to use the feed unit at an undesired point of time by correctly controlling the deterring means.

The feed metering device may be designed as an extremely compact one when the means for deterring an animal are at least partially integrated in the animal identification device. Alternatively, the means for deterring an animal may be constituted by separate means.

According to an embodiment of a feed metering device in accordance with the invention, a simple but reliable embodiment of such deterring means is characterized in that the closing means rotates about an axis, the closing means being driven by a motor that is controlled by the animal identification device. The motor preferably drives a roll which contacts the closing means. An extremely compact construction is obtained when the motor and the roll are included in the animal identification device and/or when the feed unit bears on the animal identification device by means of the roll.

The weighing means are preferably connected to the feed supplying unit for supplying an amount of fodder and/or drink to the feed unit with the aid of data both from the animal identification device and the weighing means.

The weighing means may comprise a feed unit which is pivotable about a hinge pin, the degree of pivotability being determined by the weight of the fodder and/or drink present in the feed unit, and a device for determining the degree of pivotability of the feed unit and for deducing, from the degree as determined, the weight of the fodder and/or drink present in the feed unit. The degree of pivotability of the feed unit depends on the amount of fodder and/or drink in the feed unit. The more fodder and/or drink, the higher the degree of pivotability. The exact correlation between the degree of pivotability and the amount of fodder and/or drink can previously be determined by means of simple calibration tests.

A compact construction of the feed metering device is obtained when the device for determining the degree of pivotability of the feed unit and for deducing, from the degree as determined, the weight of the fodder and/or drink present in the feed unit, is integrated in the animal identification device.

When the device for determining the degree of pivotability of the feed unit and for deducing, from the degree as determined, the weight of the fodder and/or drink present in the feed unit comprises a measuring roll which is in contact with the feed unit, it is possible to determine from the degree of rotation of the roll the degree of pivotability and thus the amount of fodder and/or drink in the feed unit.

Alternatively or additionally, the device for determining the degree of pivotability of the feed unit and for deducing, from the degree as determined, the weight of the fodder and/or drink present in the feed unit, comprises a load sensor, the feed unit bearing on the load sensor. The load sensor is preferably included in the animal identification device.

In order to be able to measure even a small difference in weight, in a preferred embodiment of a feed metering device according to the invention, the hinge pin and the load sensor respectively the measuring roll are located at a small distance from each other.

In order to prevent for example the load sensor from being damaged in the undesired event of a defect, there is provided a safety supporting bracket for the feed unit.

A preferred embodiment of a feed metering device according to the invention is characterized in that the weighing means comprise a movable feed unit, a motor for moving the feed unit, a device for measuring the magnitude of the torque during movement, and for deducing, from the magnitude of the torque measured, the weight of the fodder and/or drink present in the feed unit. The magnitude of the torque generated by the movement of the feed unit depends on the amount of fodder and/or drink in the feed unit. Also in this situation, the exact correlation between torque and amount of fodder and/or drink can previously be determined by means of simple calibration tests.

A compact feed metering device is obtained when the motor for moving the feed unit and the device for measuring the magnitude of the torque during movement and for deducing, from the magnitude of the torque measured, the weight of the fodder and/or drink present in the feed unit, are integrated in the animal identification device.

A mechanically simple but accurate construction is obtained when the motor for moving the feed unit drives a torque roll, said torque roll being in contact with the feed unit.

According to the invention, the means for deterring an unwanted animal and the measuring means can be combined in one means, in that the roll for driving the feed unit as a closing means and the torque roll used on measuring the torque are constituted by one roll.

In order to be able accurately to perform animal identification and to obtain at the same time a compact construction, a feed metering unit according to the present invention is characterized in that the animal identification device is disposed in the vicinity below the entrance opening.

According to the invention, the deterring means are at least partially integrated in the means for weighing the fodder and/or drink present in the feed unit.

The invention will be explained hereinafter in further detail with reference, by way of example, to the drawing in which:
Figure 1 is a first embodiment of a feed metering device according to the invention;
Figure 2 is a second embodiment of a feed metering device according to the invention;
Figure 3 is a third embodiment of a feed metering device according to the invention;
Figure 4 is a fourth embodiment of a feed metering device according to the invention, and
Figure 5 is a fifth embodiment of a feed metering device according to the invention.

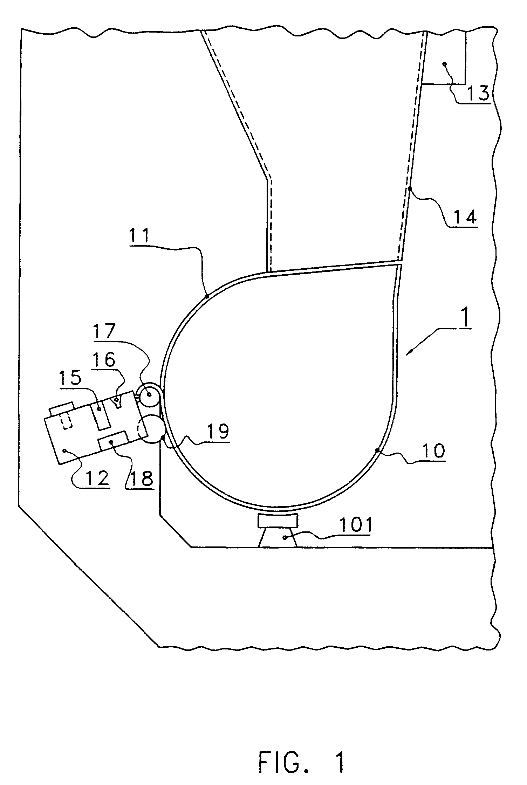

Figure 1 shows schematically a first embodiment of a feed metering device 1 according to the invention. The feed metering device 1 distributes fodder and/or drink (for the sake of simplicity hereinafter to be denoted by feed, although it will be clear that fodder and/or drink is meant), in metered portions to an animal, and is provided with a feed unit 10 for containing feed. An entrance opening 11 makes the feed unit 10 accessible to an animal, for example but not exclusively a cow. An animal identification device 12, known per se, is preferably disposed in the feed metering device 1 and recognizes a particular animal that approaches the feed unit 10 and wishes to use it. A feed supplying device 13 supplies an amount of feed to the feed unit 10, with the aid of data from the animal identification device 12, the feed of a non-shown feed stock entering the feed unit 10 via e.g. a (non-shown) valve and a chute 14.

Thus it is possible for the feed metering device 1 to recognize a particular animal, e.g. a cow, for example by means of a transponder fitted to or on the cow. The feed supplying device 13 is controlled in a manner known per se by software that ensures that the right amount of feed is distributed to the relevant cow.

According to the invention, the feed metering device may be provided with means for weighing the feed present in the feed unit. With the aid of said means it is possible to determine how much feed is consumed by a particular animal, and at the same time whether remaining feed is present in the feed unit. The means for weighing the feed present in the feed unit are preferably connected to the feed supplying device for supplying an amount of feed to the feed unit with the aid of data both from the animal identification device and the weighing means, so that the amount of feed left by the previous animal can be taken into account.

In the first embodiment of the feed metering device according to the invention, as schematically shown in Figure 1, the means for weighing the feed present in the feed unit 10 comprise a feed unit 10 which is pivotable about a hinge pin 17. The degree of pivotability is determined by the weight of the feed present in the feed unit 10. There is provided a device 18 for determining the degree of pivotability of the feed unit 10 and for deducing therefrom the weight of the feed present in the feed unit 10. The device 18 for determining the degree of pivotability of the feed unit 10 comprises a measuring roll 19 which is in contact with the feed unit. From the degree of rotation of the roll 19 the degree of pivotability and thus the amount of feed in the feed unit 10 can be determined.

Due to the fact that the device 18, 19 for determining the degree of pivotability of the feed unit 10 is integrated in the animal identification device 12, a compact construction of the feed metering device is obtained. Alternatively, the device 18, 19 may be located outside the animal identification device.

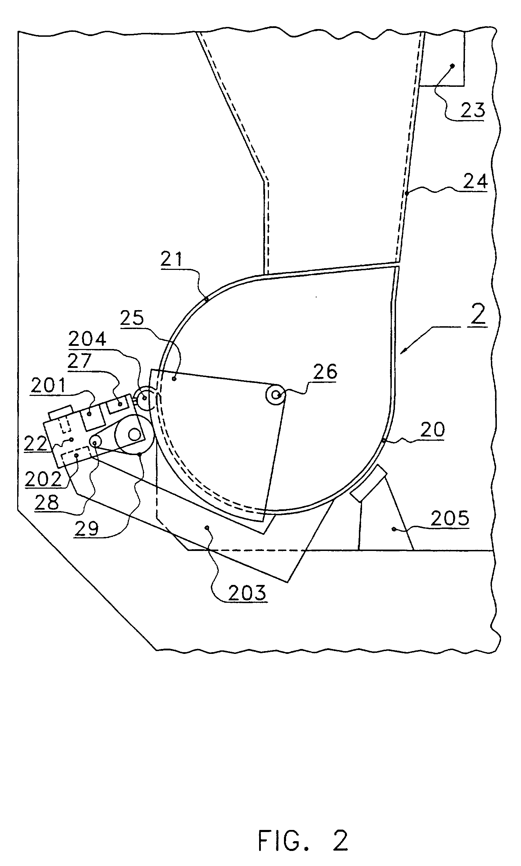

Like in the second embodiment of a feed metering device according to the invention, as shown schematically in Figure 2, the device 201 for determining the degree of pivotability of the feed unit 20 and for deducing therefrom the weight of the feed present in the feed unit 20 may alternatively or additionally comprise a load sensor 202. In the embodiment shown the feed unit 20 bears on the load sensor 202 via a supporting arm 203, while the feed unit 20 pivots about a hinge pin 204. The load sensor 202 is preferably included in the animal identification device 22.

In the embodiments shown in Figures 1 and 2, even small differences in weight can be measured due to the fact that the hinge pin 17, 204 and the measuring roll 19 respectively the load sensor 202 are located at a small distance from each other.

In order to prevent the measuring roll, the load sensor or similar from being damaged in case of an undesired defect, e.g. when the animal pushes the manger downwards with force, there may be provided in both embodiments a safety supporting bracket 101 (Figure 1) respectively 205 (Figure 2) for supporting the feed unit 10; 20.

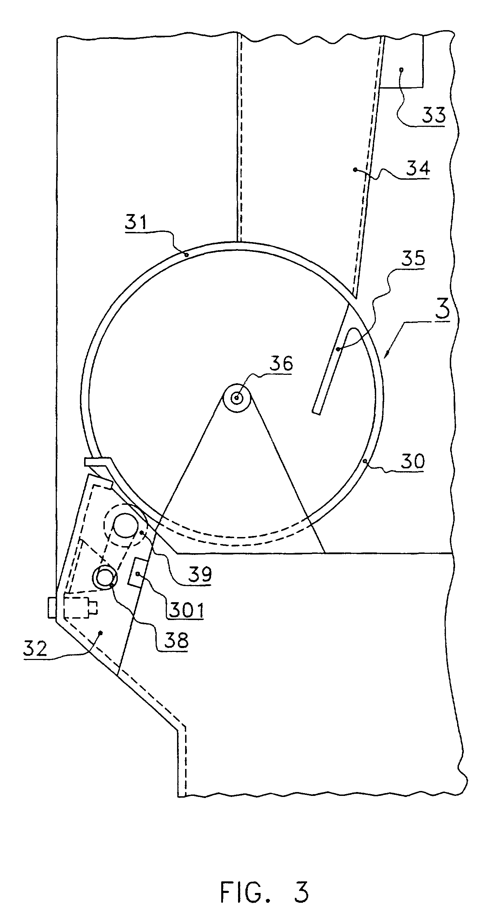

In the third embodiment of a feed metering device according to the invention, as shown schematically in Figure 3, the means for weighing the feed present in the feed unit comprise a movable feed unit 30. The feed unit 30 is moved in a reciprocating manner by the motor 38 by which the roll 39 is driven. As a result of this movement there occurs a torque whose magnitude is determined by a device 301 for measuring the magnitude of the torque. The device 301 deduces the weight of the feed present in the feed unit from the torque determined. The exact correlation between torque and amount of feed can previously be determined by means of simple calibration tests.

The embodiment according to Figure 3 has a compact construction due to the fact that the motor 38 for moving the feed unit 30 and the device 301 for measuring the magnitude of the torque during movement and for deducing, from the magnitude of the torque measured, the weight of the feed present in the feed unit 30, are integrated in the animal identification device 32.

The feed metering device according to the invention may be provided with means for deterring an animal that wishes to use the feed unit at an undesired point of time with the aid of data from the animal identification device. This makes it possible to deter animals that are not eligible for being fed, in a simple, efficient and cheap way, from putting their heads into the feed unit.

In the first embodiment shown in Figure 1, the means for deterring an animal include a loudspeaker 16 for producing an animal-frightening sound. Alternatively or additionally, the means for deterring an animal may include a lighting device 15 for emitting an animal-frightening light. In particular when a plurality of feed metering devices are disposed side by side, the use of frightening light is desirable, as this light can be directed in such a manner that its effect is limited to one particular feed metering device.

In the second embodiment shown in Figure 2 the means for deterring an animal the means for deterring an animal include a closing means 25 that is movable across the entrance opening 21. When the closing means 25 is moved across the entrance opening 21, the contents of the feed unit 20 can be made inaccessible to a particular animal. In the embodiment shown the closing means 25 is constituted by a vessel-like element which is capable of rotating about an axis 26. Said axis 26 may be constituted by an axis which is driven by a motor, which motor is controlled with the aid of data from the animal identification device 22.

Additionally, there may be provided a voltage emitting device 27 for emitting an animal-frightening electric voltage to the closing means 25. Animals that undesirably approach the feed metering device 2 often make contact with the feed metering device 2. In particular they will touch the closing means 25 with their noses. By linking with the voltage emitting device 27 precisely those components of the feed metering device that are regularly touched by the animals, it is possible to deter a particular animal very locally. Thus it is also possible to use such a voltage emitting device 27 independently of a closing means. This second embodiment of a feed metering device 2 according to the invention also comprises a feed supplying device 23 and a chute 24 for the feed.

The feed metering devices described may be designed as extremely compact ones when the means for deterring an animal are integrated in the animal identification device. Alternatively, the means for deterring an animal may be constituted by separate means.

In the third embodiment shown in Figure 3 the closing means is constituted by the feed unit 30 itself, which is designed as a movable one. In the embodiment shown the feed unit 30 is rotatably disposed about an axis 36, which axis 36 may be constituted by an axis that is driven by a motor, said motor being controlled by the animal identification device.

In order to prevent that, in the position in which the feed unit 30 closes the entrance opening 31, feed falls from the feed unit 30, the feed unit 30 comprises a wall portion 35 for catching remaining feed. Said wall portion 35 can also act as a feed guide means for feed that is supplied to the feed unit 30 via the chute 34 of the feed supplying device 33.

In order to prevent fodder and/or drink from falling from the feed unit 30 in the position in which the feed unit 30 closes the entrance opening 31, the feed unit 30 comprises a wall portion 35 for catching remaining feed. Said wall portion 35 can also act as a feed guide means for feed that is supplied via the chute 34 of the feed supplying device 33 to the feed unit 30.

As described, in the second and third embodiments there is provided a simple but reliable construction due to the fact that the closing means rotates about an axis, the closing means being driven by a motor which is controlled by the animal identification device. For the purpose of providing, besides a simple but reliable construction, also a compact construction, a roll 29 respectively 39 is preferably driven by a motor 28 respectively 38, which roll 29, 39 contacts the closing means 25 respectively 30. In the third embodiment the feed unit 30 thus bears on the animal identification device 32 via the roll 39.

An extremely compact construction is obtained when the motor 28, 38 and the roll 29, 39 are included in the relevant animal identification devices 22, 32.

Although for the roll 39 there may be used a separate torque roll, the roll 39 preferably functions as a drive of the closing means, in this situation constituted by the feed unit 30 itself, as well as a torque roll respectively a measuring roll. In the alternative case in which the feed unit 30 is moved by the axis 36 which is driven by a motor, the torque can also be measured, of course, via said motor.

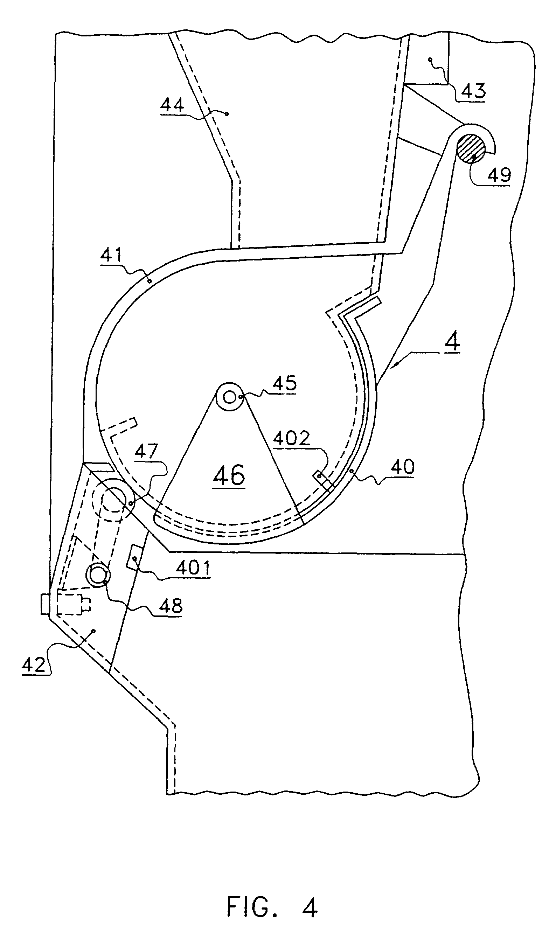

The fourth embodiment of a feed metering device 4 according to the present embodiment, as shown in Figure 4, comprises means for deterring an animal that wishes to use the feed unit 40, with the aid of data from the animal identification device 42, as well as means for weighing the feed present in the feed unit 40.

The deterring means are constituted by a separate closing means 46 which is rotatable about an axis 45. The closing means 46 is set in rotation by a roll 47 which can come into contact with the closing means 46. The roll 47 is driven by a motor 48 which is controlled by the animal identification device 42.

In this embodiment the weighing means are constituted by a feed unit 40 which is rotatable about an axis 49. The feed unit 40 can be brought into contact with the roll 47, and is subjected to a reciprocating motion by correctly controlling the motor 48 that drives the roll 47. By the movement of the feed unit 40 there is generated a torque that can be measured by the torque measuring device 401.

In the situation shown in Figure 4, the roll 47 makes contact with the feed unit 40 and the latter can be set in motion for determining the amount of feed present in the feed unit 40. After an animal has consumed the feed, the amount of remaining feed can be determined by torque measurement. Then the roll 47 is controlled by the motor 48 in such a manner that it will be partially located across the entrance opening 41. A catching element 402 on the feed unit 40 takes the closing means 46 along until the latter comes into contact with the roll 47. Then the roll 47 controls the closing means 46 in such a manner that the latter covers the entire entrance opening 41. As a result of the fact that the feed unit 40 is no longer in contact with the roll 47, the feed unit 40 falls back to the starting position in which feed can possibly be added by the feed supplying device 43 via the chute 44.

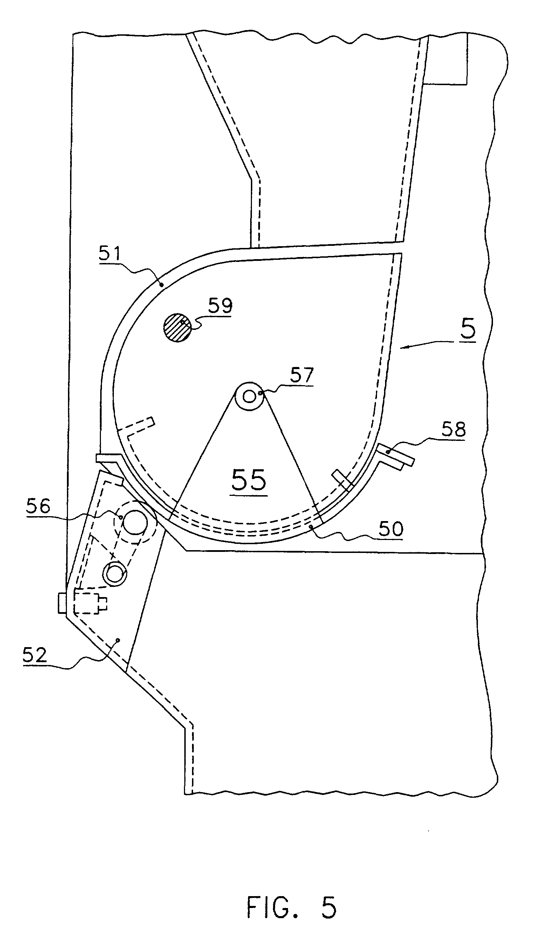

The fifth embodiment of a feed metering device according to the present invention, as shown in Figure 5, differs from that of Figure 4 by the position of the hinge pin 59 about which the feed unit 50 rotates. The hinge pin 59 is positioned close to the roll 56 for driving the feed unit 50 and measuring the torque, for measuring very small differences in the amount of feed. There is also provided a stop 58 for preventing superfluous movement of the feed unit 50. The closing means 55 for closing the entrance opening 51 pivots about the axis 57.

For the purpose of being able accurately to perform animal identification and to obtain at the same time a compact construction, a feed metering device according to the present invention is characterized in that the animal identification device is disposed in the vicinity below the entrance opening. Although the invention has been described on the basis of an animal identification device, possibly provided with weighing and/or deterring means, which is fitted to the so-called stationary world, it is also possible to dispose the animal identification device and/or the weighing and/or deterring means on the (possibly) movable feed unit.

## Claims

1. A feed metering device (1, 2, 3, 4, 5) for distributing fodder and/or drink in metered portions to an animal, which feed metering device (1, 2, 3, 4, 5) is provided with a feed unit (10, 20, 30, 40, 50) for containing fodder and/or drink, with an entrance opening (11, 21, 31, 41, 51) to the feed unit (10, 20, 30, 40, 50), with a feed supplying device (13, 23, 33, 43) for supplying an amount of fodder and/or drink to the feed unit (10, 20, 30, 40, 50) and with weighing means for weighing the fodder and/or drink present in the feed unit (10, 20, 30, 40, 50), said feed unit (10, 20, 30, 40, 50) being pivotably and/or rotatably fastened to the feed metering device (1, 2, 3, 4, 5,) for the purpose of co-operating with the weighing means, **characterized in that** deterring means (15, 16, 25, 27, 30, 40, 45, 46) are provided for deterring an animal that visits the feed unit (10, 20, 30, 40, 50) from taking fodder and/or drink, said deterring means (15, 16, 25, 27, 30, 40, 45, 46) including a closing means (25, 30, 40, 46, 50, 55) that is movable across the entrance opening and being constituted by the feed unit (30, 40, 50) which feed unit (30, 40, 50) is designed as a movable one.

2. A feed metering device (1, 2, 3, 4, 5) as claimed in claim 1, **characterized in that** the feed unit (30) comprises a wall portion (35) for catching remaining fodder and/or drink.

3. A feed metering device (1, 2, 3, 4, 5) as claimed in claim 1 or 2, **characterized in that** the feed metering device (1, 2, 3, 4, 5) further comprises an animal identification device (12, 22, 32, 42, 52) for recognizing a particular animal that visits the feed unit (10, 20, 30, 40, 50).

4. A feed metering device (1, 2, 3, 4, 5) as claimed in claim 3, **characterized in that** the deterring means (15, 16, 25, 27, 30, 40, 45, 46) are able to deter an animal with the aid of data from the animal identification device (12, 22, 32, 42, 52).

5. A feed metering device (1, 2, 3, 4, 5) as claimed in claim 3 or 4, **characterized in that** the deterring means are at least partially integrated in the animal identification device (12, 22, 32, 42, 52).

6. A feed metering device (1, 2, 3, 4, 5) as claimed in any one of claims 3, 4 or 5, **characterized in that** the closing means (25, 30, 40, 46, 50, 55) rotates about an axis (26, 36, 45, 47), the closing means being driven by a motor (28, 38, 48) which is controlled with the aid of data from the animal identification device (12).

7. A feed metering device (1, 2, 3, 4, 5) as claimed in claim 6, **characterized in that** the motor (28, 38, 48) drives a roll (29, 39, 47) which contacts the closing means.

8. A feed metering device (1, 2, 3, 4, 5) as claimed in claim 7, **characterized in that** the motor and the roll are included in the animal identification device.

9. A feed metering device (1, 2, 3, 4, 5) as claimed in claim 8, **characterized in that** the feed unit bears on the animal identification device by means of the roll.

10. A feed metering device (1, 2, 3, 4, 5) as claimed in any one of claims 3 to 9, **characterized in that** the feed supplying device (13, 23, 33, 43) is controllable by software and is able to supply an amount of feed to the feed unit (10, 20, 30, 40, 50) with the aid of data from the animal identification device (12, 22, 32, 42, 52).

11. A feed metering device (1, 2, 3, 4, 5) as claimed in claim 10, **characterized in that** the weighing means are connected to the feed supplying device (13, 23, 33, 43) which supplying device (13, 23, 33, 43) is able to supply the amount with the aid of data both from the animal identification device (12, 22, 32, 42, 52) and the weighing means.

12. A feed metering device (1, 2, 3, 4, 5) as claimed in any one of the preceding claims, **characterized in that** the weighing means comprise:
a feed unit (10, 20, 30, 40, 50), which is pivotable about a hinge pin (26, 36, 45, 57), the degree of pivotability being determined by the weight of the fodder and/or drink present in the feed unit (10, 20, 30, 40, 50),
a device (18, 201) for determining the degree of pivotability of the feed unit (10, 20, 30, 40, 50) and for deducing, from the degree as determined, the weight of the fodder and/or drink present in the feed unit (10, 20, 30, 40, 50).

13. A feed metering device (1, 2, 3, 4, 5) as claimed in claim 12 as far as referred to claim 3, **characterized in that** the device (18, 201) for determining the degree of pivotability of the feed unit (10, 20, 30, 40, 50) and for deducing, from the degree as determined, the weight of the fodder and/or drink present in the feed unit (10, 20, 30, 40, 50), is integrated in the animal identification device (12, 22, 32, 42, 52).

14. A feed metering device (1, 2, 3, 4, 5) as claimed in claim 12 or 13, **characterized in that** the device for determining the degree of pivotability of the feed unit and for deducing, from the degree as determined, the weight of the fodder and/or drink present in the feed unit, comprises a measuring roll (19, 29, 39, 47, 56) which is in contact with the feed unit.

15. A feed metering device (1, 2, 3, 4, 5) as claimed in claim 12 or 13, **characterized in that** the device for determining the degree of pivotability of the feed unit and for deducing, from the degree as determined, the weight of the fodder and/or drink present in the feed unit, is constituted by a load sensor (202), the feed unit bearing on the load sensor (202).

16. A feed metering device (1, 2, 3, 4, 5) as claimed in claim 15, **characterized in that** the load sensor (202) is included in the animal identification device (22).

17. A feed metering device (1, 2, 3, 4, 5) as claimed in claim 14 or 16, **characterized in that** the hinge pin (204, 59) and the measuring roll (29, 56) respectively the load sensor (202) are located at a small distance from each other.

18. A feed metering device (1, 2, 3, 4, 5) as claimed in any one of the preceding claims, **characterized in that** there is provided a safety supporting bracket (101, 205, 58) for the feed unit.

19. A feed metering device (1, 2, 3, 4, 5) as claimed in any one of claims 1 to 10, **characterized in that** the weighing means comprise:
a movable feed unit (30),
a motor (38) for moving the feed unit (30),
a device (301) for measuring the magnitude of the torque during movement and for deducing, from the magnitude of the torque measured, the weight of the fodder and/or drink present in the feed unit (30).

20. A feed metering device (1, 2, 3, 4, 5) as claimed in claim 19, **characterized in that** the motor (38) for moving the feed unit (30), and the device (301) for measuring the magnitude of the torque during movement and for deducing, from the magnitude of the torque measured, the weight of the fodder and/or drink present in the feed unit (30), are integrated in the animal identification device (32).

21. A feed metering device (1, 2, 3, 4, 5) as claimed in claim 19 or 20, **characterized in that** the motor (38) for moving the feed unit (30) drives a torque roll (39), which torque roll (39) is in contact with the feed unit (30).

22. A feed metering device (1, 2, 3, 4, 5) as claimed in claims 5 and 7 or 21 and 7, **characterized in that** the roll for driving the feed unit and the torque roll respectively the measuring roll, are constituted by one roll.

23. A feed metering device (1, 2, 3, 4, 5) as claimed in any one of the preceding claims, **characterized in that** the animal identification device (12, 22, 32, 43, 53) is disposed in the vicinity below the entrance opening (11, 21, 31, 41, 51).

24. A feed metering device (1, 2, 3, 4, 5) as claimed in any one of the preceding claims, **characterized in that** the deterring means are at least partially integrated in the means for weighing the fodder and/or drink present in the feed unit (10, 20, 30, 40, 50).

## Patentansprüche

1. Futterdosiervorrichtung (1, 2, 3, 4, 5) zum Ausgeben von Futter und/oder Trinkflüssigkeit in dosierten Portionen an ein Tier, wobei die Futterdosiervorrichtung (1, 2, 3, 4, 5) mit einem Futterbehälter (10, 20, 30, 40, 50) zur Aufnahme von Futter und/oder Trinkflüssigkeit, mit einer Eintrittsöffnung (11, 21, 31, 41, 51) zu dem Futterbehälter (10, 20, 30, 40, 50), mit einer Futterzuführvorrichtung (13, 23, 33, 43) zum Zuführen einer Menge an Futter und/oder Trinkflüssigkeit zu dem Futterbehälter (10, 20, 30, 40, 50) und mit einer Wiegevorrichtung zum Wiegen des in dem Futterbehälter (10, 20, 30, 40, 50) befindlichen Futters und oder der Trinkflüssigkeit versehen ist, wobei der Futterbehälter (10, 20, 30, 40, 50) schwenkbar und/oder drehbar an der Futterdosiervorrichtung (1, 2, 3, 4, 5) angebracht ist, um mit der Wiegevorrichtung zusammenzuwirken,
**dadurch gekennzeichnet, daß** Abschreckungsvorrichtungen (15, 16, 25, 27, 30, 40, 45, 46) vorhanden sind, um ein Tier, das den Futterbehälter (10, 20, 30, 40, 50) aufsucht, an der Aufnahme von Futter und/oder Trinkflüssigkeit zu hindern, wobei die Abschreckungsvorrichtungen (15, 16, 25, 27, 30, 40, 45, 46) eine Schließvorrichtung (25, 30, 40, 46, 50, 55) enthalten, die über die Eintrittsöffnung bewegbar und durch den Futterbehälter (30, 40, 50) gebildet ist, wobei der Futterbehälter (30, 40, 50) beweglich ausgeführt ist.

2. Futterdosiervorrichtung (1, 2, 3, 4, 5) nach Anspruch 1,
**dadurch gekennzeichnet, daß** der Futterbehälter (30) einen Wandteil (35) zum Auffangen von restlichem Futter und/oder Trinkflüssigkeit umfaßt.

3. Futterdosiervorrichtung (1, 2, 3, 4, 5) nach Anspruch 1 oder 2,
**dadurch gekennzeichnet, daß** die Futterdosiervorrichtung (1, 2, 3, 4, 5) ferner eine Tieridentifikationsvorrichtung (12, 22, 32, 42, 52) umfaßt, um ein bestimmtes, den Futterbehälter (10, 20, 30, 40, 50) aufsuchendes Tier zu erkennen.

4. Futterdosiervorrichtung (1, 2, 3, 4, 5) nach Anspruch 3,
**dadurch gekennzeichnet, daß** die Abschreckungsvorrichtungen (15, 16, 25, 27, 30, 40, 45, 46) in der Lage sind, ein Tier mit Hilfe von Daten von der Tieridentifikationsvorrichtung (12, 22, 32, 42, 52) abzuschrecken.

5. Futterdosiervorrichtung (1, 2, 3, 4, 5) nach Anspruch 3 oder 4,
**dadurch gekennzeichnet, daß** die Abschreckungsvorrichtungen zumindest teilweise in der Tieridentifikationsvorrichtung (12, 22, 32, 42, 52) angeordnet sind.

6. Futterdosiervorrichtung (1, 2, 3, 4, 5) nach einem der Ansprüche 3, 4 oder 5,
**dadurch gekennzeichnet, daß** sich die Schließvorrichtung (25, 30, 40, 46, 50, 55) um eine Achse (26, 36, 45, 47) dreht, wobei die Schließvorrichtung von einem Motor (28, 38, 48) angetrieben ist, der mit Hilfe von Daten aus der Tieridentifikationsvorrichtung (12) gesteuert wird.

7. Futterdosiervorrichtung (1, 2, 3, 4, 5) nach Anspruch 6,
**dadurch gekennzeichnet, daß** der Motor (28, 38, 48) eine Rolle (29, 39, 47) antreibt, die mit der Schließvorrichtung in Kontakt steht.

8. Futterdosiervorrichtung (1, 2, 3, 4, 5) nach Anspruch 7,
**dadurch gekennzeichnet, daß** der Motor und die Rolle in der Tieridentifikationsvorrichtung enthalten sind.

9. Futterdosiervorrichtung (1, 2, 3, 4, 5) nach Anspruch 8,
**dadurch gekennzeichnet, daß** der Futterbehälter mittels der Rolle an der Tieridentifikationsvorrichtung abgestützt ist.

10. Futterdosiervorrichtung (1, 2, 3, 4, 5) nach einem der Ansprüche 3 bis 9,
**dadurch gekennzeichnet, daß** die Futterzuführvorrichtung (13, 23, 33, 43) durch Software zu steuern und in der Lage ist, mit Hilfe von Daten von der Tieridentifikationsvorrichtung (12, 22, 32, 42, 52) dem Futterbehälter (10, 20, 30, 40, 50) eine Menge an Futter zuzuführen.

11. Futterdosiervorrichtung (1, 2, 3, 4, 5) nach Anspruch 10,
**dadurch gekennzeichnet, daß** die Wiegevorrichtung mit der Futterzuführvorrichtung (13, 23, 33, 43) verbunden ist, wobei die Zuführvorrichtung (13, 23, 33, 43) in der Lage ist, die Menge mit Hilfe von Daten sowohl von der Tieridentifikationsvorrichtung (12, 22, 32, 42, 52) als auch von der Wiegevorrichtung zuzuführen.

12. Futterdosiervorrichtung (1, 2, 3, 4, 5) nach einem der vorhergehenden Ansprüche,
**dadurch gekennzeichnet, daß** die Wiegevorrichtung folgende Teile umfaßt:
einen Futterbehälter (10, 20, 30, 40, 50), der um einen Gelenkstift (26, 36, 45, 57) schwenkbar ist, wobei das Maß der Schwenkbarkeit durch das Gewicht des in dem Futterbehälter (10, 20, 30, 40, 50) befindlichen Futters und/oder der Trinkflüssigkeit bestimmt wird,
eine Vorrichtung (18, 201), um das Maß der Schwenkbarkeit des Futterbehälters (10, 20, 30, 40, 50) zu ermitteln und von dem ermittelten Maß das Gewicht des in dem Futterbehälter (10, 20, 30, 40, 50) befindlichen Futters und/oder der Trinkflüssigkeit abzuleiten.

13. Futterdosiervorrichtung (1, 2, 3, 4, 5) nach Anspruch 12, soweit dieser auf Anspruch 3 rückbezogen ist,
**dadurch gekennzeichnet, daß** die Vorrichtung (18, 201), um das Maß der Schwenkbarkeit des Futterbehälters (10, 20, 30, 40, 50) zu ermitteln und von dem ermittelten Maß das Gewicht des in dem Futterbehälter (10, 20, 30, 40, 50) befindlichen Futters und/oder der Trinkflüssigkeit abzuleiten, in der Tieridentifikationsvorrichtung (12, 22, 32, 42, 52) angeordnet ist.

14. Futterdosiervorrichtung (1, 2, 3, 4, 5) nach Anspruch 12 oder 13,
**dadurch gekennzeichnet, daß** die Vorrichtung, um das Maß der Schwenkbarkeit des Futterbehälters zu ermitteln und von dem ermittelten Maß das Gewicht des in dem Futterbehälter befindlichen Futters und/oder der Trinkflüssigkeit abzuleiten, eine Meßrolle (19, 29, 39, 47, 56) umfaßt, die mit dem Futterbehälter in Kontakt steht.

15. Futterdosiervorrichtung (1, 2, 3, 4, 5) nach Anspruch 12 oder 13,
**dadurch gekennzeichnet, daß** die Vorrichtung, um das Maß der Schwenkbarkeit des Futterbehälters zu ermitteln und von dem ermittelten Maß das Gewicht des in dem Futterbehälter befindlichen Futters und/oder der Trinkflüssigkeit abzuleiten, durch einen Belastungssensor (202) gebildet ist, wobei der Futterbehälter an dem Belastungssensor (202) abgestützt ist.

16. Futterdosiervorrichtung (1, 2, 3, 4, 5) nach Anspruch 15,
**dadurch gekennzeichnet, daß** der Belastungssensor (202) in der Tieridentifikationsvorrichtung (22) angeordnet ist.

17. Futterdosiervorrichtung (1, 2, 3, 4, 5) nach Anspruch 14 oder 16,
**dadurch gekennzeichnet, daß** der Gelenkstift (204, 59) und die Meßrolle (29, 56) bzw. der Belastungssensor (202) in geringem Abstand voneinander angeordnet sind.

18. Futterdosiervorrichtung (1, 2, 3, 4, 5) nach einem der vorhergehenden Ansprüche,
**dadurch gekennzeichnet, daß** ein Sicherheitsstützbügel (101, 205, 58) für den Futterbehälter vorgesehen ist.

19. Futterdosiervorrichtung (1, 2, 3, 4, 5) nach einem der Ansprüche 1 bis 10,
**dadurch gekennzeichnet, daß** die Wiegevorrichtung folgende Teile umfaßt:
einen beweglichen Futterbehälter (30),
einen Motor (38) zum Bewegen des Futterbehälters (30),
eine Vorrichtung (301), um die Größe des Drehmoments während der Bewegung zu messen und von der gemessenen Größe des Drehmoments das Gewicht des in dem Futterbehälter (30) befindlichen Futters und/oder der Trinkflüssigkeit abzuleiten.

20. Futterdosiervorrichtung (1, 2, 3, 4, 5) nach Anspruch 19,
**dadurch gekennzeichnet, daß** der Motor (38) zum Bewegen des Futterbehälters (30) und die Vorrichtung (301), um die Größe des Drehmoments während der Bewegung zu messen und von der gemessenen Größe des Drehmoments das Gewicht des in dem Futterbehälter (30) befindlichen Futters und/oder der Trinkflüssigkeit abzuleiten, in der Tieridentifikationsvorrichtung (32) angeordnet sind.

21. Futterdosiervorrichtung (1, 2, 3, 4, 5) nach Anspruch 19 oder 20,
**dadurch gekennzeichnet, daß** der Motor (38) zum Bewegen des Futterbehälters (30) eine Drehmomentrolle (39) antreibt, wobei die Drehmomentrolle (39) in Kontakt mit dem Futterbehälter (30) steht.

22. Futterdosiervorrichtung (1, 2, 3, 4, 5) nach den Ansprüchen 5 und 7 oder 21 und 7,
**dadurch gekennzeichnet, daß** die Rolle zum Antreiben des Futterbehälters und die Drehmomentrolle bzw. die Meßrolle durch eine Rolle gebildet sind.

23. Futterdosiervorrichtung (1, 2, 3, 4, 5) nach einem der vorhergehenden Ansprüche,
**dadurch gekennzeichnet, daß** die Tieridentifikationsvorrichtung (12, 22, 32, 43, 53) nahe und unterhalb der Eintrittsöffnung (11, 21, 31, 41, 51) angeordnet ist.

24. Futterdosiervorrichtung (1, 2, 3, 4, 5) nach einem der vorhergehenden Ansprüche,
**dadurch gekennzeichnet, daß** die Abschreckungsvorrichtungen zumindest teilweise in der Vorrichtung zum Wiegen des in dem Futterbehälter (10, 20, 30, 40, 50) befindlichen Futters und/oder der Trinkflüssigkeit angeordnet sind.

## Revendications

1. Dispositif de dosage d'alimentation (1, 2, 3, 4, 5) destiné à distribuer du fourrage et/ou de la boisson en portions dosées à un animal, lequel dispositif de dosage d'alimentation (1, 2, 3, 4, 5) est proposé avec une unité d'alimentation (10, 20, 30, 40, 50) destinée à contenir le fourrage et/ou la boisson, avec une ouverture d'entrée (11, 21, 31, 41, 51) vers l'unité d'alimentation (10, 20, 30, 40, 50), avec un dispositif de fourniture d'aliments (12, 23, 33, 43) destiné à introduire une quantité de fourrage et/ou de boisson vers l'unité d'alimentation (10, 20, 30, 40, 50) et avec des moyens de pesage destinés à peser le fourrage et/ou la boisson présents dans l'unité d'alimentation (10, 20, 30, 40, 50), ladite unité d'alimentation (10, 20, 30, 40, 50) étant fixée de manière pivotante et/ou rotative au dispositif de dosage d'alimentation (1, 2, 3, 4, 5) dans l'objet de coopérer avec les moyens de pesage, **caractérisé en ce que** des moyens de dissuasion (15, 16, 25, 27, 30, 40, 45, 46) sont proposés pour dissuader un animal qui visite l'unité d'alimentation (10, 20, 30, 40, 50) de prendre du fourrage et/ou de la boisson, lesdits moyens de dissuasion (15, 16, 25, 27, 30, 40, 45, 46) comprenant des moyens de fermeture (25, 30, 40, 46, 50, 55) qui sont mobiles à travers l'ouverture d'entrée et étant constitués de l'unité d'alimentation (30, 40, 50), laquelle unité d'alimentation (30, 40, 50) est conçue en tant qu'unité mobile.

2. Dispositif de dosage d'alimentation (1, 2, 3, 4, 5) selon la revendication 1, **caractérisé en ce que** l'unité d'alimentation (30) comprend une partie formant paroi (35) destinée à attraper le fourrage et/ou la boisson restants.

3. Dispositif de dosage d'alimentation (1, 2, 3, 4, 5) selon la revendication 1 ou 2, **caractérisé en ce que** le dispositif de dosage d'alimentation (1, 2, 3, 4, 5) comprend en outre un dispositif d'identification des animaux (12, 22, 32, 42, 52) destiné à reconnaître un animal particulier qui visite l'unité d'alimentation (10, 20, 30, 40, 50).

4. Dispositif de dosage d'alimentation (1, 2, 3, 4, 5) selon la revendication 3, **caractérisé en ce que** les moyens de dissuasion (15, 16, 25, 27, 30, 40, 45, 46) sont capables de dissuader un animal à l'aide des données provenant du dispositif d'identification des animaux (12, 22, 32, 42, 52).

5. Dispositif de dosage d'alimentation (1, 2, 3, 4, 5) selon la revendication 3 ou 4, **caractérisé en ce que**
les moyens de dissuasion sont au moins partiellement intégrés dans le dispositif d'identification des animaux (12, 22, 32, 42, 52).

6. Dispositif de dosage d'alimentation (1, 2, 3, 4, 5) selon l'une quelconque des revendications 3, 4 ou 5, **caractérisé en ce que** les moyens de fermeture (25, 30, 40, 46, 50, 55) tournent autour d'un axe (26, 36, 45, 47), les moyens de fermeture étant entraînés par un moteur (28, 38, 48) qui est commandé à l'aide des données provenant du dispositif d'identification des animaux (12).

7. Dispositif de dosage d'alimentation (1, 2, 3, 4, 5) selon la revendication 6, **caractérisé en ce que** le moteur (28, 38, 48) entraîne un rouleau (29, 39, 47) qui entre en contact avec les moyens de fermeture.

8. Dispositif de dosage d'alimentation (1; 2, 3, 4, 5) selon la revendication 7, **caractérisé en ce que** le moteur et le rouleau sont compris dans le dispositif d'identification des animaux.

9. Dispositif de dosage d'alimentation (1, 2, 3, 4, 5) selon la revendication 8, **caractérisé en ce que** l'unité d'alimentation porte sur le dispositif d'identification des animaux au moyen du rouleau.

10. Dispositif de dosage d'alimentation (1, 2, 3, 4, 5) selon l'une quelconque des revendications 3 à 9, **caractérisé en ce que** le dispositif de fourniture d'aliments (13, 23, 33, 43) peut être commandé par logiciel et est capable d'introduire une quantité d'aliments vers l'unité d'alimentation (10, 20, 30, 40, 50) à l'aide des données provenant du dispositif d'identification des animaux (12, 22, 32, 42, 52).

11. Dispositif de dosage d'alimentation (1, 2, 3, 4, 5) selon la revendication 10, **caractérisé en ce que** les moyens de pesage sont reliés au dispositif de fourniture d'aliments (13, 23, 33, 43) lequel dispositif de fourniture d'aliments (13, 23, 33, 43) est capable d'introduire la quantité à l'aide des données à la fois provenant du dispositif d'identification des animaux (12, 22, 32, 42, 52) et des moyens de pesage.

12. Dispositif de dosage d'alimentation (1, 2, 3, 4, 5) selon l'une quelconque des revendications précédentes, **caractérisé en ce que** les moyens de pesage comprennent :
une unité d'alimentation (10, 20, 30, 40, 50) qui peut tourner autour d'un axe d'articulation (26, 36, 45, 57), le degré de pivotement étant déterminé par le poids du fourrage et/ou de la boisson présents dans l'unité d'alimentation (10, 20, 30, 40, 50),
un dispositif (18, 201) destiné à déterminer le degré de pivotement de l'unité d'alimentation (10, 20, 30, 40, 50) et à déduire, à partir du degré tel que déterminé, le poids du fourrage et/ou de la boisson présents dans l'unité d'alimentation (10, 20, 30, 40, 50).

13. Dispositif de dosage d'alimentation (1, 2, 3, 4, 5) selon la revendication 12 et tel que référencé dans la revendication 3, **caractérisé en ce que** le dispositif (18, 201) destiné à déterminer le degré de pivotement de l'unité d'alimentation (10, 20, 30, 40, 50) et à déduire, à partir du degré tel que déterminé, le poids du fourrage et/ou de la boisson présents dans l'unité d'alimentation (10, 20, 30, 40, 50), est intégré dans le dispositif d'identification des animaux (12, 22, 32, 42, 52).

14. Dispositif de dosage d'alimentation (1, 2, 3, 4, 5) selon la revendication 12 ou 13, **caractérisé en ce que** le dispositif destiné à déterminer le degré de pivotement de l'unité d'alimentation et à déduire, à partir du degré tel que déterminé, le poids du fourrage et/ou de la boisson présents dans l'unité d'alimentation, comprend un rouleau de mesure (19, 29, 39, 47, 56) qui est en contact avec l'unité d'alimentation.

15. Dispositif de dosage d'alimentation (1, 2, 3, 4, 5) selon la revendication 12 ou 13, **caractérisé en ce que** le dispositif destiné à déterminer le degré de pivotement de l'unité d'alimentation et à déduire, à partir du degré tel que déterminé, le poids du fourrage et/ou de la boisson présents dans l'unité d'alimentation, est constitué d'un capteur de charge (202), l'unité d'alimentation portant sur le capteur de charge (202).

16. Dispositif de dosage d'alimentation (1, 2, 3, 4, 5) selon la revendication 15, **caractérisé en ce que** le capteur de charge (202) est compris dans le dispositif d'identification des animaux (22).

17. Dispositif de dosage d'alimentation (1, 2, 3, 4, 5) selon la revendication 14 ou 16, **caractérisé en ce que** le l'axe d'articulation (204, 59) et le rouleau de mesure (29, 56) respectivement le capteur de charge (202) sont situés à une petite distance les uns des autres.

18. Dispositif de dosage d'alimentation (1, 2, 3, 4, 5) selon l'une quelconque des revendications précédentes, **caractérisé en ce qu'**il est proposé un support de sécurité (101, 205, 58) pour l'unité d'alimentation.

19. Dispositif de dosage d'alimentation (1, 2, 3, 4, 5) selon l'une quelconque des revendications 1 à 10, **caractérisé en ce que** les moyens de pesage comprennent :
une unité d'alimentation mobile (30),
un moteur (38) destiné à mesurer l'amplitude du couple pendant le mouvement et à déduire, à partir de l'amplitude du couple mesurée, le poids du fourrage et/ou de la boisson présents dans l'unité d'alimentation (30).

20. Dispositif de dosage d'alimentation (1, 2, 3, 4, 5) selon la revendication 19, **caractérisé en ce que** le moteur (38) destiné à déplacer l'unité d'alimentation (30) et le dispositif (301) destiné à mesurer l'amplitude du couple pendant le mouvement et à déduire, à partir de l'amplitude du couple mesurée, le poids du fourrage et/ou de la boisson présents dans l'unité d'alimentation (30), sont intégrés dans le dispositif d'identification des animaux (32).

21. Dispositif de dosage d'alimentation (1, 2, 3, 4, 5) selon la revendication 19 ou 20, **caractérisé en ce que** le moteur (38) destiné à déplacer l'unité d'alimentation (30) entraîne un rouleau de couple (39), lequel rouleau de couple (39) est en contact avec l'unité d'alimentation (30).

22. Dispositif de dosage d'alimentation (1, 2, 3, 4, 5) selon les revendications 5 et 7 ou 21 et 7, **caractérisé en ce que** le rouleau destiné à entraîner l'unité d'alimentation et le rouleau de couple respectivement le rouleau de mesure sont constitués par un rouleau.

23. Dispositif de dosage d'alimentation (1, 2, 3, 4, 5) selon l'une quelconque des revendications précédentes, **caractérisé en ce que** le dispositif d'identification des animaux (12, 22, 32, 43, 53) est disposé à proximité en dessous de l'ouverture d'entrée (11, 21, 31, 41, 51).

24. Dispositif de dosage d'alimentation (1, 2, 3, 4, 5) selon l'une quelconque des revendications précédentes, **caractérisé en ce que** les moyens de dissuasion sont au moins partiellement intégrés dans les moyens de pesage du fourrage et/ou de la boisson présents dans l'unité d'alimentation (10, 20, 30, 40, 50).
